# FASCICULE DE BREVET EUROPEEN

(11) **EP 1 805 611 B1**
(45) Date de publication et mention de la délivrance du brevet: **29.11.2017**
(21) Numéro de dépôt: 05794997.6
(22) Date de dépôt: 28.07.2005
(51) Int. Cl.: G06F 9/46

(54) **PROCEDE D'ORDONNANCEMENT DE TRAITEMENT DE TÂCHES ET DISPOSITIF POUR METTRE EN OEUVRE LE PROCEDE**
TASK-VERARBEITUNGS-EINTEILUNGSVERFAHREN UND EINRICHTUNG ZU SEINER IMPLEMENTIERUNG
TASK PROCESSING SCHEDULING METHOD AND DEVICE FOR IMPLEMENTING SAME

(30) Priorité: 30.07.2004 FR 0451743
(43) Date de publication de la demande: 11.07.2007
(73) Titulaire: Commissariat à l'Énergie Atomique et aux Énergies Alternatives, 75015 Paris (FR)
(72) Inventeur: VENTROUX, Nicolas, F-91440 BURES SUR YVETTE (FR); CHEVOBBE, Stéphane, F-75020 PARIS (FR); BLANC, Frédéric, F-78140 VELIZY (FR); COLLETTE, Thierry, F-91120 PALAISEAU (FR)
(74) Mandataire: Ahner, Philippe
(86) Numéro de dépôt international: PCT/FR2005/050626
(87) Numéro de publication internationale: WO 2006/021713

(56) Documents cités:
- EP-A- 0 697 656
- WO-A-01/18683
- US-A- 5 826 080
- US-A1- 2003 084 088
- US-A1- 2004 054 997
- KRITHI RAMAMRITHAM: "Allocation and scheduling of precedence-related periodic tasks" IEEE TRANSACTIONS ON PARALLEL AND DISTRIBUTED SYSTEMS, [Online] vol. 6, no. 4, avril 1995 (1995-04), pages 412-420, XP002330128 Extrait de l'Internet: URL:http://ieeexplore.ieee.org/iel4/71/853 7/00372795.pdf?arnumber=372795> [extrait le 2005-05-31]
- BIZZARRI P ET AL: "A scheduling algorithm for aperiodic groups of tasks in distributed real-time systems and its holistic analysis" DISTRIBUTED COMPUTING SYSTEMS, 1997., PROCEEDINGS OF THE SIXTH IEEE COMPUTER SOCIETY WORKSHOP ON FUTURE TRENDS OF TUNIS, TUNISIA 29-31 OCT. 1997, LOS ALAMITOS, CA, USA,IEEE COMPUT. SOC, US, 29 octobre 1997 (1997-10-29), pages 296-301, XP010261209 ISBN: 0-8186-8153-5

## Description

### Domaine technique et art antérieur

L'invention concerne un procédé d'ordonnancement de traitement de tâches ainsi qu'un dispositif pour mettre en oeuvre le procédé. L'invention concerne également un procédé de traitement de tâches ainsi que le dispositif associé.

L'invention s'applique dans un très grand nombres de domaines tels que, par exemple, le domaine de l'électronique embarquée (téléphonie mobile, automobile, aéronautique, etc.) ou encore le domaine des systèmes électroniques distribués complexes destinés aux calculs intensifs tels que les supercalculateurs.

L'électronique embarquée doit aujourd'hui répondre à des demandes de plus en plus fortes en terme de flexibilité et de performance. Par exemple, dans le domaine des applications multimédia (téléphones cellulaires, ordinateurs portables, etc.), les processeurs généralistes ne suffisent plus à eux seuls à répondre aux contraintes nouvellement imposées.

Des systèmes composés de plusieurs processeurs spécialisés, de blocs reconfigurables, de mémoires, etc. sont ainsi apparus et ont donné lieu à l'émergence d'une technologie intégrée sur puce plus communément appelée technologie SoC pour « Systems on Chip ». Pour améliorer les performances et la flexibilité de la technologie SoC, des réseaux de communication ont été intégrés au sein des puces afin d'interconnecter les différents éléments qui sont intégrés sur les puces. Ces systèmes de réseaux sur puce, communément appelés NoC pour « Network on Chip », apportent aujourd'hui une solution adaptée à l'intégration de futures technologies. Néanmoins, la gestion du parallélisme de tâches et l'exécution optimale d'applications restent des problèmes majeurs à résoudre sur ces réseaux.

Les algorithmes d'ordonnancement de tâches sont largement représentés dans la littérature. Les algorithmes traitant des tâches non dynamiquement parallélisables (le nombre de processeurs est connu à la compilation) et dont l'ordonnancement est basé sur des listes de tâches triées sont l'objet de l'invention. D'autres solutions, telles que, par exemple, les algorithmes génétiques, sont plus performantes et permettent d'atteindre de meilleurs résultats. Cependant, ces solutions plus performantes sont trop complexes pour pouvoir être mises en oeuvre sur silicium et leur intérêt reste limité dans le cadre de l'invention.

Blazewicz et son équipe ont apporté une solution intéressante pour déterminer les solutions exactes dans le cas où toutes les tâches ont le même temps d'exécution (cf. référence bibliographique [BLAZ86]). Néanmoins, l'algorithme nécessaire engendre un temps de calcul important ainsi que d'importants échanges de données.

Jansen et son équipe ont quant à eux considéré l'ordonnancement de tâches indépendantes pouvant s'exécuter sur seulement un seul processeur (cf. référence bibliographique [JANS99]). Ils ont apporté une solution de complexité polynomiale, donc de faible complexité mathématique. Cela dit, une étude sur son implémentation physique révèle une mise en oeuvre trop complexe pour obtenir de bonnes performances.

Ramamritham décrit un algorithme statique d'allocation et de planification de composants de tâches périodiques à travers des sites dans des systèmes distribués. En plus de traiter les contraintes de périodicité, cet algorithme gère la priorité, la communication, ainsi que les exigences de réplication des sous-tâches des tâches.

Des conclusions similaires sont vérifiées dans des travaux plus proches de la problématique de l'invention (cf. références bibliographiques [BAER73, BAKE81]). D'autres solutions nécessitent de pouvoir évaluer les temps restant aux tâches pour s'exécuter (cf. référence bibliographique [TOPC02] et brevet US 6,567,840 B1). Mais ceci n'est pas envisageable pour des systèmes asynchrones et l'ordonnancement dynamique consomme énormément d'énergie puisqu'il nécessite des mises à jour continues.

D'autres résultats ont également montré que le tri des tâches en fonction du nombre de ressources utiles se révèle particulièrement intéressant en termes de complexité et de temps d'exécution résultant [cf. références bibliographiques LI00 et IBAR88]. Pour l'allocation de tâches sur les ressources, la principale innovation présentée dans la littérature consiste à changer dynamiquement le nombre de ressources utiles à l'exécution de tâche. Ceci n'est néanmoins pas envisageable dans le cadre d'une solution physique puisque la compilation d'une tâche est dépendante du nombre de ressources nécessaires.

### Exposé de l'invention

L'algorithme d'ordonnancement de traitement de tâches selon l'invention ne présente pas les inconvénients mentionnés ci-dessus.

L'invention concerne un procédé d'ordonnancement de traitement de tâches dont l'exécution est conditionnée par un ordre de préséance, le traitement d'une tâche comprenant une étape de configuration de ressources nécessaires à l'exécution de la tâche et une étape d'exécution de la tâche sur les ressources ainsi configurées. Le procédé est caractérisé en ce qu'il comprend :
- une sélection d'au moins un niveau de tâches à traiter,
- une étape de tri des tâches du niveau de tâches à traiter pour définir, en accord avec l'ordre de préséance, un ordre de priorité dans le traitement des tâches, en fonction, d'une part, du nombre de ressources nécessaires au traitement des tâches et, d'autre part, d'une grandeur caractéristique des tâches,
- une évaluation du nombre de ressources disponibles pour le traitement des tâches du niveau de tâches, et
- une assignation des tâches du niveau de tâches aux ressources disponibles conformément à l'ordre de priorité.

Selon une caractéristique supplémentaire de l'invention, l'étape de tri comprend, d'une part, un premier tri selon le nombre de ressources nécessaires à l'exécution des tâches de sorte que les tâches soient traitées selon un ordre décroissant du nombre de ressources nécessaires à leur traitement et, d'autre part, un deuxième tri selon la grandeur caractéristique des tâches de sorte que les tâches soient traitées selon un ordre croissant ou décroissant de leur grandeur caractéristique.

Selon une première variante de l'invention, le premier tri précède le deuxième tri, le deuxième tri étant mis en oeuvre dès lors que le nombre de ressources nécessaires aux traitement de plusieurs tâches est identique pour lesdites plusieurs tâches.

Selon une deuxième variante de l'invention, le deuxième tri précède le premier tri, le premier tri étant mis en oeuvre dès lors que la grandeur caractéristique des tâches relative à plusieurs tâches est identique pour lesdites plusieurs tâches.

Selon une caractéristique supplémentaire de l'invention, la grandeur caractéristique des tâches est la durée de traitement des tâches, ou la durée de configuration des ressources nécessaires à l'exécution des tâches, ou la durée d'exécution des tâches, ou une durée qui reste à une tâche pour s'exécuter en fonction d'une contrainte temporelle d'exécution associée à la tâche, ou la durée de traitement, de configuration ou d'exécution de une ou plusieurs tâches de rang supérieur dans l'ordre de préséance des tâches, ou une date de fin au plus tard de la configuration des tâches ou de l'exécution des tâches, ou une date de début au plus tôt ou au plus tard de la configuration ou de l'exécution de une ou plusieurs tâches de rang supérieur dans l'ordre de préséance des tâches, ou une durée fonction d'une périodicité relative à une ou plusieurs tâches, ou une durée fonction de tout ou partie des grandeurs caractéristiques énumérées ci-dessus.

Selon encore une caractéristique supplémentaire de l'invention, la grandeur caractéristique des tâches est une largeur de bande passante utile à l'exécution des tâches, ou une cadence d'arrivée des données traitées par les tâches, ou un nombre de ressources utiles au stockage ou à la communication des données traitées par les tâches, ou un coût de communications avec d'autres tâches ou avec des ressources partagées entre les tâches, ou une consommation d'énergie engendrée par le traitement des tâches, ou une information qui mesure la complexité des opérations associées à l'exécution des tâches, ou une information qui mesure la régularité d'un algorithme associé à l'exécution des tâches, ou une information qui mesure le parallélisme d'exécution des tâches, ou une information qui mesure une priorité indépendante des tâches et imposée par un utilisateur dans le cas d'une utilisation multi-utilisateur, ou une fonction de tout ou partie des grandeurs caractéristiques énumérées ci-dessus.

Selon encore une caractéristique supplémentaire de l'invention, la grandeur caractéristique des tâches est une information relative à la position des tâches dans un graphe d'application.

Selon encore une caractéristique supplémentaire de l'invention, l'information relative à la position des tâches dans un graphe d'application est la durée qui reste aux tâches pour s'exécuter avant la fin_d'une contrainte temporelle imposée à la durée de traitement du graphe d'application, ou le plus grand nombre de tâches qui restent à traiter avant la fin du graphe d'application, ou le plus grand nombre de tâches de rang supérieur dans l'ordre de préséance des tâches, ou la somme des durées d'exécution des tâches de rang supérieur dans l'ordre de préséance des tâches, ou une fonction de tout ou partie des grandeurs énumérées ci-dessus.

Selon encore une caractéristique supplémentaire de l'invention, le niveau de tâches est défini par validation de contraintes de préséance des tâches du niveau de tâches.

Selon encore une caractéristique supplémentaire de l'invention, l'assignation des ressources disponibles en fonction de l'ordre de priorité est répétée de façon dynamique jusqu'à ce que toutes les tâches du niveau de tâches soient traitées.

Selon encore une caractéristique supplémentaire de l'invention, le traitement d'un niveau de tâches de rang G débute dès lors que toutes les tâches du niveau de tâches de rang G-1 qui précède le niveau de tâches de rang G ont été configurées.

L'invention concerne également un procédé de traitement de tâches dont l'exécution est conditionnée par un ordre de préséance, le traitement d'une tâche comprenant une étape de configuration de ressources nécessaires à l'exécution de la tâche et une étape d'exécution de la tâche sur les ressources ainsi configurées. Le procédé de traitement est caractérisé en ce qu'il comprend un ordonnancement du traitement des tâches selon le procédé de l'invention et en ce que la configuration des ressources et l'exécution des tâches sont activées, respectivement, par un jeton de configuration et par un jeton d'exécution.

L'invention concerne également un dispositif d'ordonnancement de traitement de tâches dont l'exécution est conditionnée par un ordre de préséance, le traitement d'une tâche comprenant une étape de configuration de ressources nécessaires à l'exécution de la tâche et une étape d'exécution de la tâche sur les ressources ainsi configurées. Le dispositif est caractérisé en ce qu'il comprend :
- un composant qui contient un ensemble de tâches à traiter,
- un bloc de sélection pour sélectionner au moins un niveau de tâches à traiter parmi l'ensemble des tâches contenues dans le composant,
- des moyens pour trier les tâches du niveau de tâches sélectionné selon un ordre de priorité de sorte que, en accord avec l'ordre de préséance, les tâches soient traitées, en fonction, d'une part, du nombre de ressources nécessaires au traitement des tâches et, d'autre part, d'une grandeur caractéristique des tâches, et
- des moyens pour assigner des ressources disponibles au traitement des tâches en fonction de l'ordre de priorité.

Selon une caractéristique supplémentaire de l'invention, les moyens pour trier les tâches d'un niveau de tâches sélectionné comprennent :
- un premier bloc mémoire contenant des informations représentatives du nombre de ressources nécessaires au traitement de chaque tâche,
- un deuxième bloc mémoire contenant des informations représentatives de grandeurs caractéristiques des tâches,
- des premiers moyens de comparaison pour comparer entre elles les informations représentatives des grandeurs caractéristiques des tâches du niveau de tâches,
- des deuxièmes moyens de comparaison pour comparer le nombre de ressources disponibles au nombre de ressources nécessaires aux traitements des tâches du niveau de tâches, et
- des moyens pour établir l'ordre de priorité en fonction des résultats de comparaison délivrés par les premiers et deuxièmes moyens de comparaison.

Selon une caractéristique supplémentaire de l'invention, les moyens pour établir l'ordre de priorité en fonction des résultats de comparaison comprennent un ensemble de registres à décalage contenant des données binaires.

Selon une caractéristique supplémentaire de l'invention, le composant qui contient l'ensemble des tâches à traiter est un composant reconfigurable adapté au contrôle qui comprend N+1 cellules représentant N+1 états d'un graphe d'application de tâches à exécuter, chaque cellule contenant une tâche à exécuter, et un réseau d'interconnexion reconfigurable pour relier les différents états du graphe entre eux.

Selon une caractéristique supplémentaire de l'invention, le bloc de sélection de tâches comprend des moyens pour rejeter le traitement de une ou plusieurs tâches du niveau de tâches à traiter afin d'autoriser un fonctionnement dégradé du système en vue de respecter des conditions environnementales, comme par exemple une puissance ou une énergie maximale disponible, une contrainte de temps imposée sur le niveau de tâches, une contrainte sur la disponibilité des ressources de calcul, de mémorisation ou de communication, ou une contrainte de comptabilité électromagnétique avec le milieu extérieur, ou tout ou partie des conditions énumérées ci-dessus.

L'invention concerne également un dispositif de traitement de tâches, caractérisé en ce qu'il comprend un dispositif d'ordonnancement de tâches selon l'invention contenant un composant reconfigurable adapté au contrôle, un jeton de configuration et un jeton d'exécution parcourant le réseau d'interconnexion pour activer, respectivement, la configuration des tâches et l'exécution des tâches.

Le procédé d'ordonnancement de traitement de tâches selon l'invention permet d'augmenter très sensiblement les performances de l'ordonnancement de tâches indépendantes. Le dispositif de mise en oeuvre du procédé de l'invention est composé de plusieurs entités. Les tâches à exécuter sont des tâches non préemptives (c'est-à-dire qu'elles ne peuvent pas être interrompues), non malléables (c'est-à-dire que le nombre de ressources utiles à leur exécution est connu à l'avance), de durées d'exécution et de grandeur caractéristique connues.

Le procédé d'ordonnancement selon l'invention favorise l'allocation contiguë de ressources pour le traitement d'une même tâche. Il minimise la durée totale d'exécution des tâches et favorise l'occupation des ressources.

Le procédé d'ordonnancement selon l'invention gère dynamiquement l'allocation et la libération des ressources de calcul et permet d'auto-adapter les ressources en fonction des besoins. Il permet la configuration des ressources avant leur exécution tout en tenant compte des contraintes de préséance, et cela pour des systèmes constitués d'un nombre quelconque de ressources identiques ou hétérogènes. Par ressources hétérogènes, il faut entendre des ressources de nature différentes (mémoires, microprocesseurs, blocs reconfigurables, IP (IP pour « Intellectual Property »), interfaces, bus, etc.)

### Brève description des figures

D'autres caractéristiques et avantages de l'invention apparaîtront à la lecture d'un mode de réalisation préférentiel fait en référence aux figures jointes, parmi lesquelles :
- la figure 1 représente un exemple de graphe d'application de tâches ;
- la figure 2 représente un organigramme de principe d'ordonnancement de traitement d'un niveau de tâches selon l'invention ;
- la figure 3 représente un exemple d'ordonnancement de traitement de tâches dans le cas où le nombre de ressources pour le traitement des tâches est illimité ;
- la figure 4 représente un exemple d'ordonnancement de traitement de tâches selon l'invention ;
- la figure 5 représente un dispositif d'ordonnancement de traitement de tâches selon l'invention ;
- les figures 6A-6C représentent des exemples d'application du dispositif d'ordonnancement de traitement de tâches selon l'invention.

Sur toutes les figures, les mêmes repères désignent les mêmes éléments.

### Description détaillée de modes de mise en oeuvre de l'invention

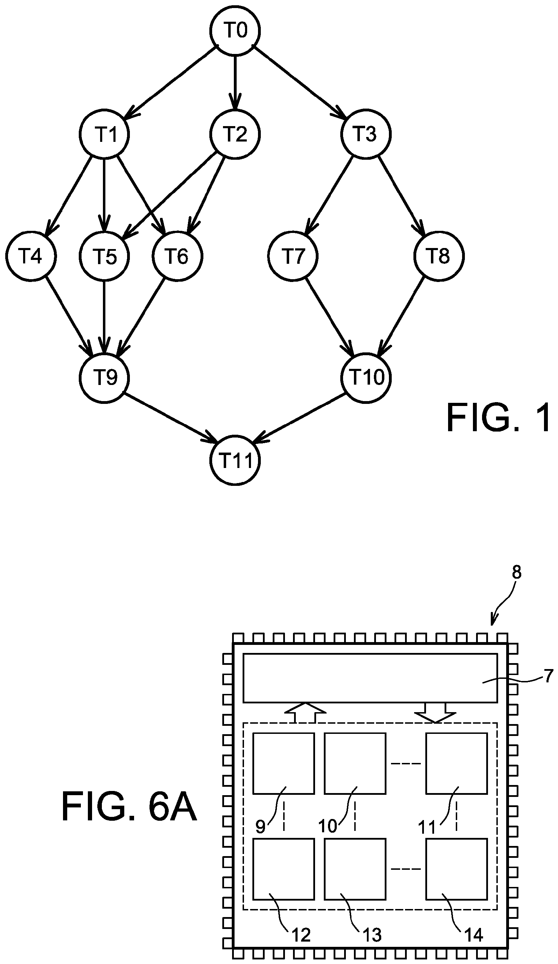

La figure 1 représente un exemple de graphe d'application de tâches à exécuter. Les noeuds représentent les tâches et les flèches reliant les noeuds symbolisent l'ordre de préséance dans lequel les tâches doivent être exécutées.

Avant la mise en oeuvre du procédé, les informations suivantes sont connues :
- l'ordre de préséance dans lequel les tâches doivent être exécutées (cf. ci-dessous),
- le nombre total de ressources de calcul disponibles pour le traitement des tâches,
- le nombre de ressources de calcul nécessaires au traitement de chaque tâche,
- la durée nécessaire au traitement de chaque tâche.

Par « durée nécessaire au traitement d'une tâche », il faut entendre une durée égale à la somme de la durée de configuration des ressources qui doivent contribuer à l'exécution de la tâche et de la durée d'exécution de la tâche sur les ressources ainsi configurées. La durée de configuration des ressources est la durée pendant laquelle les opérations qui sont nécessaires à l'exécution de la tâche sont configurées dans les ressources.

Les tâches sont exécutées niveau par niveau. Des contraintes de préséance conditionnent la définition des niveaux de tâches ainsi que la mise en oeuvre de l'exécution des tâches au sein d'un même niveau.

L'ordre de préséance des douze tâches T0-T11 à traiter est ici le suivant :
- la tâche T0 doit être exécutée avant les tâches T1, T2 et T3,
- la tâche T1 doit être exécutée avant les tâches T4, T5 et T6,
- la tâche T2 doit être exécutée avant les tâches T5 et T6,
- la tâche T3 doit être exécutée avant les tâches T7 et T8,
- chacune des tâches T4, T5 et T6 doit être exécutée avant la tâche T9,
- chacune des tâches T7 et T8 doit être exécutée avant la tâche T10,
- les tâches T9 et T10 doivent être exécutées avant la tâche T11.

De façon générale, pour un graphe d'application donné, un niveau de tâches de rang G comprend toutes les tâches dont le début de l'exécution dépend directement de la fin de l'exécution des tâches du niveau de tâches précédent de rang G-1.

Dans l'exemple choisi de la figure 1, il y a donc cinq niveaux de tâches successifs, à savoir :
- le niveau N0 qui comprend la tâche T0
- le niveau N1 qui comprend les tâches T1, T2, T3,
- le niveau N2 qui comprend les tâches T4, T5, T6, T7, T8,
- le niveau N3 qui comprend les tâches T9 et T10, et
- le niveau N4 qui comprend la tâche T11.

Dans la suite de la description, pour des raisons de simplification, une tâche sera dite « tâche mère » par rapport à une ou des tâches dite(s) « tâche(s) fille(s) », lorsque l'exécution de la ou des tâche(s) fille(s) dépend directement de l'achèvement de l'exécution de la tâche mère. A titre d'exemple non limitatif, la tâche T1 est ainsi une tâche mère pour les trois tâches filles T4, T5, T6 et la tâche T2 est également une tâche mère pour les deux tâches filles T5 et T6.

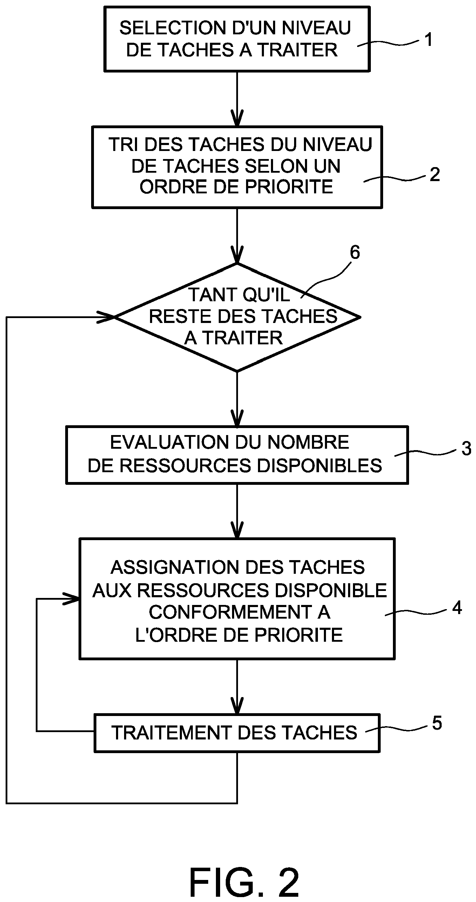

La figure 2 représente un organigramme de principe du procédé d'ordonnancement d'un niveau de tâches selon l'invention.

Une première étape du procédé consiste à sélectionner un niveau de tâches à traiter en fonction de l'ordre de préséance des tâches (étape 1). Une fois le niveau de tâches sélectionné, les tâches du niveau de tâches sont triées pour établir un ordre de priorité de traitement des tâches (étape 2).

Selon le mode de réalisation préférentiel de l'invention, durant l'étape de tri, les tâches sont tout d'abord triées par ordre décroissant du nombre de ressources nécessaires à leur exécution et, si le nombre de ressources est identique entre plusieurs tâches, ces dernières sont alors triées par ordre décroissant de leur durée de traitement (comme mentionné ci-dessus, la durée de traitement d'une tâche est la somme de la durée de configuration des ressources affectées à la tâche et de la durée d'exécution de la tâche sur les ressources configurées). L'ordre de priorité ainsi défini privilégie le traitement de la tâche ou des tâches qui utilisent le plus de ressources et, à nombres de ressources identiques, la tâche qui demande la durée de traitement la plus longue.

D'autres modes de réalisation de l'invention sont également possibles. Le tri selon la durée de traitement des tâches peut ainsi précéder le tri selon le nombre de ressources. C'est alors le traitement de la ou des tâches (s) de plus longue (s) durée(s) qui est privilégié et, à durées identiques, la tâche qui utilise le plus de ressources.

D'autres critères de tri, selon d'autres grandeurs caractéristiques des tâches à traiter, peuvent également être utilisés dans le cadre de l'invention.

Outre la durée de traitement des tâches, la grandeur caractéristique des tâches peut être la durée de configuration des ressources nécessaires à l'exécution des tâches, ou la durée d'exécution des tâches, ou une durée qui reste à une tâche pour s'exécuter en fonction d'une contrainte temporelle d'exécution associée à la tâche, ou la durée de traitement, de configuration ou d'exécution de une ou plusieurs tâches de rang supérieur dans l'ordre de préséance des tâches, ou une date de fin au plus tard de la configuration des tâches ou de l'exécution des tâches, ou une date de début au plus tôt ou au plus tard de la configuration ou de l'exécution de une ou plusieurs tâches de rang supérieur dans l'ordre de préséance des tâches, ou une durée fonction d'une périodicité relative à une ou plusieurs tâches, ou une durée fonction de tout ou partie des grandeurs caractéristiques énumérées ci-dessus.

La grandeur caractéristique des tâches peut également être une largeur de bande passante utile à l'exécution des tâches, ou une cadence d'arrivée des données traitées par les tâches, ou un nombre de ressources utiles au stockage ou à la communication des données traitées par les tâches, ou un coût de communications avec d'autres tâches ou avec des ressources partagées entre les tâches, ou une consommation d'énergie engendrée par le traitement des tâches, ou une information qui mesure la complexité des opérations associées à l'exécution des tâches, ou une information qui mesure la régularité d'un algorithme associé à l'exécution des tâches, ou une information qui mesure le parallélisme d'exécution des tâches, ou une information qui mesure une priorité indépendante des tâches et imposée par un utilisateur dans le cas d'une utilisation multi-utilisateur, ou une fonction de tout ou partie des grandeurs caractéristiques énumérées ci-dessus.

La grandeur caractéristique des tâches peut également être une information relative à la position des tâches dans un graphe d'application. L'information relative à la position des tâches dans le graphe d'application peut alors être la durée qui reste aux tâches pour s'exécuter avant la fin d'une contrainte temporelle imposée à la durée de traitement du graphe d'application, ou le plus grand nombre de tâches qui restent à traiter avant la fin du graphe d'application, ou le plus grand nombre de tâches de rang supérieur dans l'ordre de préséance des tâches, ou la somme des durées d'exécution des tâches de rang supérieur dans l'ordre de préséance des tâches, ou une fonction de tout ou partie des grandeurs énumérées ci-dessus.

Une fois les tâches triées par ordre de priorité, le nombre de ressources disponibles est évalué (étape 3). Les tâches sont alors assignées aux ressources disponibles, en vue de leur traitement, conformément à l'ordre de priorité précédemment établi (étape 4). Le traitement des tâches est alors exécuté (étape 5). Les étapes d'évaluation du nombre de ressources disponibles, d'assignation des tâches aux ressources disponibles et de traitement des tâches sont répétées aussi longtemps qu'il reste des tâches à traiter (6). Le mécanisme d'assignation dynamique des tâches est également répété jusqu'à ce que toutes les tâches du niveau aient été traitées (retour de l'étape 5 vers l'étape 4).

La mise en oeuvre de l'invention pour un graphe d'application de tâches tel que le graphe représenté en figure 1 va maintenant être décrite.

Dans le cadre de l'invention, le nombre total de ressources pour le traitement de tâches est limité. A titre d'exemple non limitatif, le nombre Ri de ressources nécessaires pour exécuter la tâche Ti (i=0, 2, ..., 11) peut être représenté par le tableau suivant :

| Ti | Ri |
|---|---|
| T0 | 1 |
| T1 | 4 |
| T2 | 1 |
| T3 | 3 |
| T4 | 1 |
| T5 | 4 |
| T6 | 1 |
| T7 | 2 |
| T8 | 1 |
| T9 | 1 |
| T10 | 3 |
| T11 | 2 |

Dans la suite de la description, la notation « configTi » représente la durée de configuration des ressources qui doivent exécuter la tâche Ti et la notation « execTi » représente la durée d'exécution de la tâche Ti sur les ressources ainsi configurées. La durée « execTi » succède donc à la durée « configTi ».

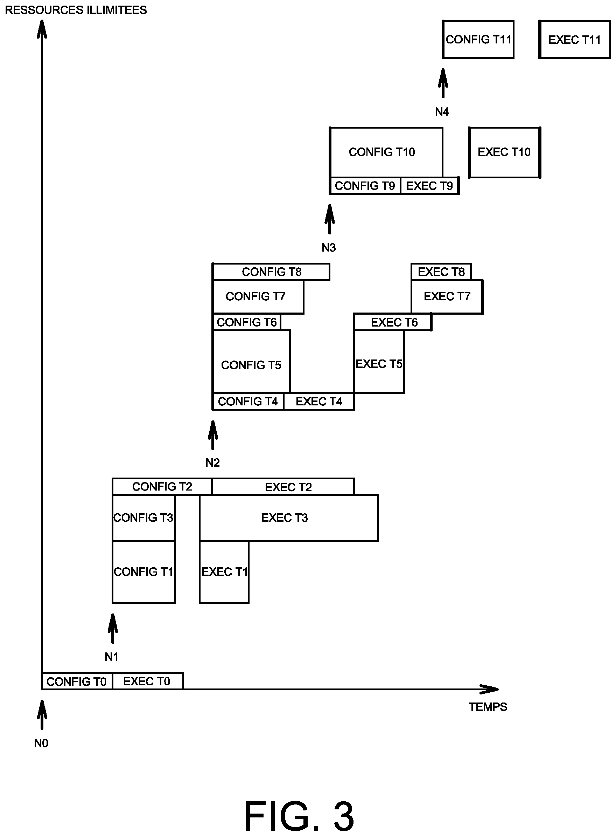

La figure 3 représente un exemple d'ordonnancement de tâches dans un cas où le nombre de ressources pour le traitement des tâches est illimité. L'ordonnancement des tâches selon l'exemple de la figure 3 ne rentre donc pas dans le cadre de l'invention. Cet exemple est cité à seule fin didactique, pour illustrer, dans un cas idéal, l'articulation qui existe entre les étapes de configuration et les étapes d'exécution des tâches.

La tâche T0 est la première tâche à exécuter et représente, à elle seule, un premier niveau N0 de tâches. La ressource destinée à exécuter la tâche T0 est alors configurée pendant la durée « configT0 » et, lorsque la configuration est terminée, la tâche est exécutée sur la ressource pendant la durée « execT0 ».

Lorsque la durée « configT0 » s'achève, il y a validation des contraintes de préséance des tâches T1, T2, T3 qui constituent le deuxième niveau N1 de tâches. Le nombre de ressources étant illimité, les ressources nécessaires à l'exécution des tâches T1, T2 et T3 sont alors configurées, en parallèle, pendant les durées respectives « configT1 », « configT2 », « configT3 » sur autant de ressources qu'il est nécessaire. Dès que la durée « execT0 » est terminée, l'exécution des tâches dont les ressources ne sont pas occupées par l'opération de configuration débute. En l'occurrence, selon l'exemple choisi, les durées « execT1 » et « execT3 » débutent en parallèle alors que la durée « execT2 » ne débute que dès l'achèvement de la durée « configT2 ».

Simultanément à l'achèvement de la durée de configuration de la tâche T2 (dernière tâche du niveau N1), il y a validation des contraintes de préséance des tâches T4, T5, T6, T7 et T8 qui constituent le troisième niveau N2 de tâches. Les ressources nécessaires à l'exécution des tâches T4, T5, T6, T7 et T8 sont alors configurées. Les durées «configT4 », « configT5 », « configT6 », « configT7 », « configT8 » débutent simultanément, sur autant de ressources que nécessaire. Les tâches T4, T5, T6, T7 et T8 sont ensuite exécutées en respectant les validations des contraintes de préséance.

Le procédé se poursuit ainsi, niveau par niveau, le traitement d'un nouveau niveau de tâches débutant dès lors que toutes les tâches du niveau précédent ont été configurées.

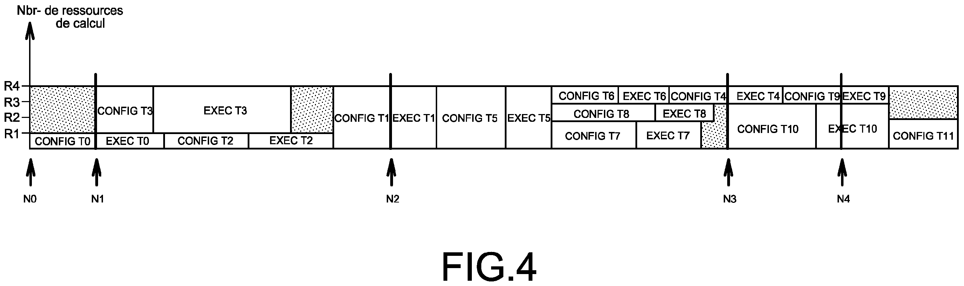

Dans le cadre de l'invention, le nombre de ressources est limité et un ordre de priorité doit être établi pour assigner le traitement des tâches aux ressources. La figure 4 illustre le procédé d'ordonnancement de l'invention, à titre d'exemple non limitatif, dans le cas où le nombre de ressources est limité à quatre.

Un niveau de tâches débute dès lors que toutes les tâches du niveau précédent ont été configurées. La configuration des tâches du niveau N1 débute donc lorsque la configuration de la tâche T0 se termine, c'est-à-dire lorsque la tâche T0 commence son exécution. La tâche T0 s'exécutant sur une seule ressource et le nombre total de ressources disponibles étant égal à quatre, le nombre de ressources disponibles est égal à trois. C'est donc la configuration de la tâche T3 qui débute, puisque celle-ci est la tâche qui utilise le plus de ressources (trois) dans les limites des trois ressources disponibles. L'exécution de la tâche T3 succède alors à la configuration de la tâche T3 et, lorsque l'exécution de la tâche T0 s'achève, la ressource qui devient disponible est utilisée pour la configuration de la tâche T2 à laquelle succède l'exécution de la tâche T2. Aussi longtemps que la tâche T2 s'exécute, seules trois ressources sont disponibles. La configuration de la tâche T1 qui nécessite quatre ressources ne peut donc pas s'effectuer. Dès que la tâche T2 a terminé son exécution, la configuration de la tâche T1 peut alors commencer. A la fin de la configuration de la tâche T1, toutes les tâches du niveau N1 ayant été configurées, le niveau N2 constitué des tâches T4, T5, T6, T7 et T8 est constitué.

Le procédé se poursuit ainsi, niveau par niveau, un nouveau niveau de tâches à exécuter débutant dès lors que toutes les tâches du niveau précédent ont été configurées.

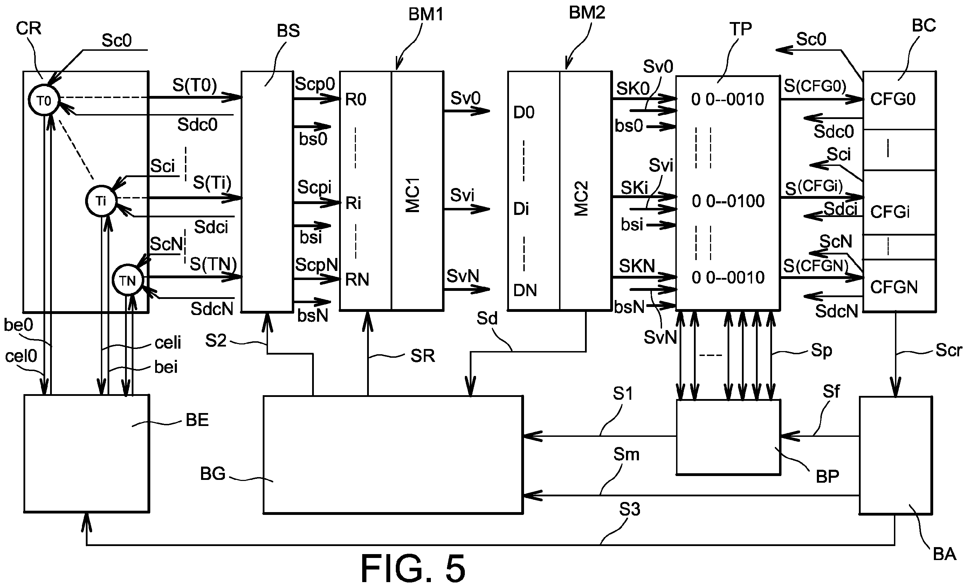

Un dispositif pour la mise en oeuvre du procédé d'ordonnancement de tâches selon le mode de réalisation préférentiel de l'invention est représenté en figure 5.

Ce dispositif comprend un composant reconfigurable adapté au contrôle CR qui contient l'ensemble des tâches à exécuter, un bloc de sélection de niveau BS qui permet de sélectionner, à un instant donné, toutes les tâches d'un même niveau, un premier bloc mémoire BM1 contenant des informations représentatives du nombre de ressources nécessaires à l'exécution de chaque tâche et des premiers moyens de comparaison, un deuxième bloc mémoire BM2 qui comprend des informations représentatives des grandeurs caractéristiques de chaque tâche (préférentiellement les durées de traitement des tâches) et des deuxièmes moyens de comparaison, une table de priorité TP qui indique de façon dynamique un ordre de priorité dans lequel les tâches doivent être traitées, un bloc de configuration BC qui contient les données de configuration nécessaires à la configuration des ressources associées à chaque tâche, un bloc d'assignation de tâches BA ayant pour fonction, entre autres, de configurer les tâches, un bloc d'évaluation de priorité BP qui indique la position de la tâche qui est prioritaire dans la table de priorité TP, un bloc de gestion des ressources BG et un bloc d'exécution des tâches BE.

Le composant reconfigurable adapté au contrôle CR est préférentiellement un composant reconfigurable tel que celui décrit dans le brevet français publié sous le numéro 2 795 840 et délivré le 31 août 2001. Il est constitué de N+1 cellules Ci (i=0, 1, 2, ..., N) représentant les N+1 états du graphe d'application et d'un réseau d'interconnexion reconfigurable pour relier les différents états entre eux. Chaque cellule Ci contient la tâche Ti. Deux jetons parcourent le graphe d'application en fonction des validations des contraintes de préséance des tâches. Un premier jeton, appelé « jeton de configuration », parcourt le réseau d'interconnexion pour activer la configuration des tâches, au fur et à mesure de l'évolution des configurations et des contraintes de préséance. Le second jeton, appelé « jeton d'exécution », parcourt le réseau d'interconnexion pour activer l'exécution des tâches, au fur et à mesure de l'évolution des exécutions et des contraintes de préséance. Un jeton est la représentation d'un signal de validation se propageant de cellules en cellules suivant les contraintes de préséance et suivant la validation de ces contraintes. Une cellule propage son jeton à ses cellules filles si la contrainte de préséance est validée. Ce mécanisme est connu en soi dans le cadre de la théorie des graphes et plus particulièrement dans le cadre de la théorie des graphes de Pétri [cf. référence bibliographique PETE81].

De façon générale, une tâche mère transmet un jeton de configuration à ses tâches filles dès lors qu'elle a reçu un jeton d'exécution. Cette disposition ne concerne pas la ou les tâches sources d'un graphe d'application qui ne dépendent d'aucune tâche mère et peuvent, en conséquence, transmettre un jeton de configuration à leurs tâches filles dès que leur configuration débute. Au début de l'exécution du graphe d'application, une tâche source (tâche T0 dans l'exemple choisi) contient un jeton de configuration et un jeton d'exécution.

Les données contenues dans les blocs BM1, BM2, TP et BC sont disposées sous forme de N+1 lignes de données de sorte que chaque ligne de données correspond à une tâche différente. Il s'ensuit que :
- les données Ri (i=0, 1, 2, ..., N) représentatives du nombre de ressources nécessaires à l'exécution de chaque tâche sont disposées, dans le bloc mémoire BM1, sous la forme de N+1 lignes de données,
- les données Di (i=0, 1, 2..., N) représentatives des durées de traitement des tâches contenues dans le bloc mémoire BM2 sont disposées sous la forme de N+1 lignes de données,
- la table de priorité TP est constituée de N+1 lignes de registres à décalage, les registres à décalage de la ligne de rang i (i=0, 1, 2, ..., N) contenant un ensemble de données binaires représentatif du rang de priorité de la tâche Ti,
- les données de configuration CFGi (i=0, 1, 2..., N) nécessaires à la configuration des ressources Ri sont disposées sous la forme de N+1 lignes de données.

Le fonctionnement du dispositif représenté en figure 5 va maintenant être décrit en référence au graphe d'application de la figure 1.

A l'état initial, avant que le traitement des tâches ne débute, les registres à décalage de toutes les lignes de la table de priorité sont dans le même état. Ainsi, par exemple, tous les registres d'une même ligne comprennent-ils la valeur binaire « 0 », à l'exception du registre à décalage situé à une extrémité de la ligne, par exemple l'extrémité droite (voir figure), qui comprend la valeur binaire « 1 » (niveau logique haut).

Au début du traitement du graphe d'application, la cellule C0 du graphe qui contient la tâche T0 contient un jeton de configuration et un jeton d'exécution. La tâche T0 est alors la tâche prioritaire à traiter puisqu'elle est seule à composer le niveau de tâches à exécuter. Sur la ligne mémoire qui correspond à la tâche T0, le niveau logique haut situé le plus à droite est alors décalé vers la gauche sous l'action du signal bs0 délivré par le bloc BS. Les ressources nécessaires à l'exécution de la tâche T0 sont alors configurées grâce au bloc d'assignation BA. A cette fin, les données CFG0 nécessaires à la configuration des ressources relatives à la tâche T0 sont transmises, via un signal Scr, du bloc de configuration BC au bloc d'assignation BA. Un signal Sc0 qui indique que la configuration des ressources associées à la tâche T0 débute est également transmis, via les blocs TP, BM2, BM1, BS, du bloc de configuration BC vers la cellule C0 qui contient la tâche T0. A la réception du signal Sc0, le jeton de configuration que contient la cellule C0 est autorisé à se propager à toutes les cellules qui contiennent les tâches du niveau suivant, à savoir les cellules C1, C2, C3 qui contiennent les tâches T1, T2, T3 car C0 contient un jeton d'exécution. Les cellules C1, C2, C3 émettent alors, chacune, un signal de validation de tâche (signaux respectifs S(T1), S(T2), S(T3)) transmis au bloc de sélection BS.

Lorsque la configuration des ressources associées à la tâche T0 se termine, le bloc d'assignation BA délivre un signal de fin de configuration de ressources Sf au bloc d'évaluation de priorité BP. Le bloc BP délivre alors à la table de priorité TP un signal Sp qui commande le décalage du niveau logique haut complètement à droite sur la ligne mémoire qui correspond à la tâche T0.

Les registres à décalage de la table de priorité TP se retrouvent alors dans un état identique à l'état initial (tous les niveaux logiques hauts se retrouvent complètement à droite dans la table de priorité TP). Le bloc d'évaluation de priorité BP transmet alors au bloc de gestion des ressources BG un signal S1 qui indique que la table de priorité TP est revenue à son état initial. Sous l'action du signal S1, le bloc de gestion de ressources BG délivre un signal de commande S2 au bloc de sélection BS qui mémorise alors les tâches correspondant aux signaux précédemment validés S(T1), S(T2), S(T3). Le niveau de tâches T1, T2, T3 est alors constitué comme nouveau niveau de tâches à exécuter. Un décalage à gauche de chaque ligne validée par le bloc BS est alors effectué dans la table de priorité TP grâce aux signaux bsi correspondants.

Une phase d'initialisation débute alors. La phase d'initialisation consiste à initialiser la table de priorité TP. Au début de l'initialisation, les cases mémoires des registres à décalage situées les plus à droite sont à des niveaux logiques hauts, à l'exception des cases mémoires qui correspondent aux tâches validées par le bloc de sélection BS. Le niveau de tâches à exécuter est maintenant constitué des tâches T1, T2, T3. Les signaux Scpi générés par le bloc de sélection BS permettent d'indiquer au bloc mémoire BM1 quelles sont les tâches à comparer. Les données D1, D2, D3 représentant les durées de traitement respectives des tâches T1, T2, T3 sont alors comparées entre elles à l'aide des deuxièmes moyens de comparaison MC2 intégrés dans le bloc BM2. Les niveaux logiques hauts contenus dans les registres à décalage de la table de priorité TP sont alors d'autant plus décalés vers la gauche que les durées des tâches qui leur correspondent sont longues. Les décalages se font grâce aux signaux SKi.

A la fin des comparaisons des durées de traitement et des décalages des niveaux logiques hauts qui en découlent, un signal de fin de comparaison Sd est délivré par le bloc BM2 au bloc de gestion BG. A la réception du signal Sd, le bloc de gestion BG délivre un signal SR représentatif du nombre de ressources de calcul disponibles. Le signal SR représentatif du nombre de ressources de calcul disponibles est alors comparé aux données Ri sélectionnées par les signaux Scpi, et contenues dans le premier bloc mémoire BM1 à l'aide des premiers moyens de comparaison MC1. Si des lignes mémoire du bloc BM1 contiennent des données Ri représentant une valeur identique à la valeur représentée par le signal SR, alors des signaux Svi sont envoyés à la table de priorité TP. Si aucune ligne mémoire ne contient de données représentant une valeur identique, la valeur représentée par le signal SR est décrémentée jusqu'à ce que une ou des données Ri soit identique à la valeur représentée par le signal SR.

La ligne de rang i sélectionnée par le signal Svi et qui correspond au registre à décalage qui contient le niveau logique haut le plus à gauche est alors la ligne prioritaire et un signal de validation de configuration S(CFGi) qui correspond à cette ligne est transmis au bloc de configurations BC. La détection de la ligne prioritaire se fait grâce au bloc d'évaluation de priorité BP, sous l'action des signaux de priorité Sp. Le contenu de la ligne du bloc de configuration BC validée par le signal S(CFGi) est alors envoyé au bloc d'assignation de tâches BA, via le signal Scr. Un signal Sdci est alors également envoyé au composant CR pour permettre la propagation du jeton de configuration. Le jeton de configuration n'est cependant propagé que si la cellule possède un jeton d'exécution. Si la tâche T1 est la tâche utilisant le plus grand nombre de ressources ou la tâche de plus longue durée (dans le cas du graphe d'application de la figure 1, la tâche T1 utilise le plus grand nombre de ressources), la configuration CFG1 est envoyée au bloc d'assignation des tâches BA. A la réception de la configuration CFG1, via le signal Scr délivré par le bloc BC, le bloc BA assigne alors la tâche T1 sur les ressources disponibles. Lorsque la configuration de la tâche est terminée, un signal Sf de fin de configuration de tâche est délivré par le bloc d'assignation BA au bloc d'évaluation de priorité BP. Le signal Sf commande le décalage complètement à droite du contenu de la ligne prioritaire précédemment sélectionnée (ligne de la tâche T1, en l'occurrence), via le signal Sp, dans la table de priorité TP. De plus, l'emplacement de la tâche configurée sur les ressources est donné au bloc d'exécution BE via un signal S3. Un signal Sm de demande de mise à jour du nombre de ressources disponibles est alors délivré par le bloc d'assignation BA et transmis au bloc de gestion des ressources BG.

Le traitement de toutes les tâches du niveau de tâches à exécuter s'exécute ainsi, jusqu'à la dernière tâche du niveau de tâches. Lorsque tous les niveaux logiques hauts se trouvent complètement à droite dans la table de priorité TP, cela signifie que le traitement du niveau de tâches est terminé et un signal S1 est transmis au bloc de gestion BG pour permettre la définition d'un nouveau niveau d'exécution via le signal S2. Le procédé d'ordonnancement de tâches se continue ainsi, niveau de tâches par niveau de tâches.

La première tâche à exécuter du niveau de tâches comporte à l'initialisation un jeton de configuration et un jeton d'exécution. Ainsi, son exécution débute aussitôt que sa configuration est terminée. La cellule correspondante dans le composant reconfigurable adapté au contrôle CR débute son exécution en envoyant un signal celi au bloc d'exécution des tâches BE. Le bloc d'exécution des tâches BE connaissant l'emplacement de la tâche à exécuter qui a été préalablement configurée sur les ressources de calcul, exécute alors la tâche. A la fin de l'exécution de la tâche, un signal bei est envoyé à la cellule correspondante dans le composant reconfigurable adapté au contrôle CR. Ce signal a pour effet de propager le jeton d'exécution vers toutes ses cellules filles suivant les contraintes de préséance. Dans l'exemple décrit, la cellule correspondante à la tâche T0 propage son jeton vers les cellules associées aux tâches T1, T2, T3. A la réception du jeton d'exécution, les cellules T1, T2, T3 peuvent propager leurs jetons de configuration à leurs cellules filles T4, T5, T6, T7, T8 et commencer leurs exécutions dès que leurs configurations sont terminées. Les tâches T4, T5, T6, T7, T8 pourront à leur tour demander leur configuration et s'exécuter.

Pour effectuer l'ordonnancement des tâches sur un système hétérogène, il suffit d'intégrer dans la solution hardware autant de blocs BM1 qu'il y a de types de ressources différents. L'allocation des tâches se fait alors en prenant en compte le nombre de ressources libres pour chaque type de ressources présentes dans le système.

Selon le mode de réalisation préférentiel de l'invention décrit ci-dessus, les tâches sont contenues dans un composant reconfigurable adapté au contrôle et les moyens pour établir l'ordre de priorité comprennent un ensemble de registres à décalage contenant des données binaires. Selon d'autres modes de réalisation de l'invention, le composant n'est pas un composant adapté au contrôle mais un simple composant contenant les tâches à traiter. De même, les moyens pour établir un ordre de priorité ne comprennent pas de registres à décalage mais des additionneurs capables d'incrémenter leur contenu en fonction des résultats des comparaisons, une incrémentation d'additionneur étant alors l'équivalent d'un décalage de registre à décalage.

Les figures 6A-6C représentent des exemples d'application du dispositif d'ordonnancement de traitement de tâches selon l'invention. Les ressources de calcul gérées par le dispositif d'ordonnancement peuvent être identiques ou de différentes natures (ressources hétérogènes). Ces composants permettent de répondre aux fortes demandes de performance et de flexibilité associées aux applications embarquées. L'invention offre la possibilité de lier entre eux sur une même plateforme ou de façon plus distribuée, des éléments dont les caractéristiques sont complémentaires ou opposées pour adapter le niveau de performance, de consommation, de flexibilité et de surface en fonction des besoins de l'application.

La figure 6A représente un premier exemple de composant de technologie SoC qui intègre un dispositif d'ordonnancement de traitement de tâches selon l'invention.

Outre le dispositif d'ordonnancement 7, le composant 8 comprend un microprocesseur 9, un bloc 10 de calcul spécialisé CDMA (CDMA pour « Code Division Multiple Access »), un bloc 11 dédié et propriétaire appelé IP (Intellectual Property), un bloc 12 de calcul reconfigurable, un bloc 13 de calcul reconfigurable et propriétaire, un bloc 14 de calcul spécialisé MPEG (MPEG pour « Motion Picture Expert Group »).

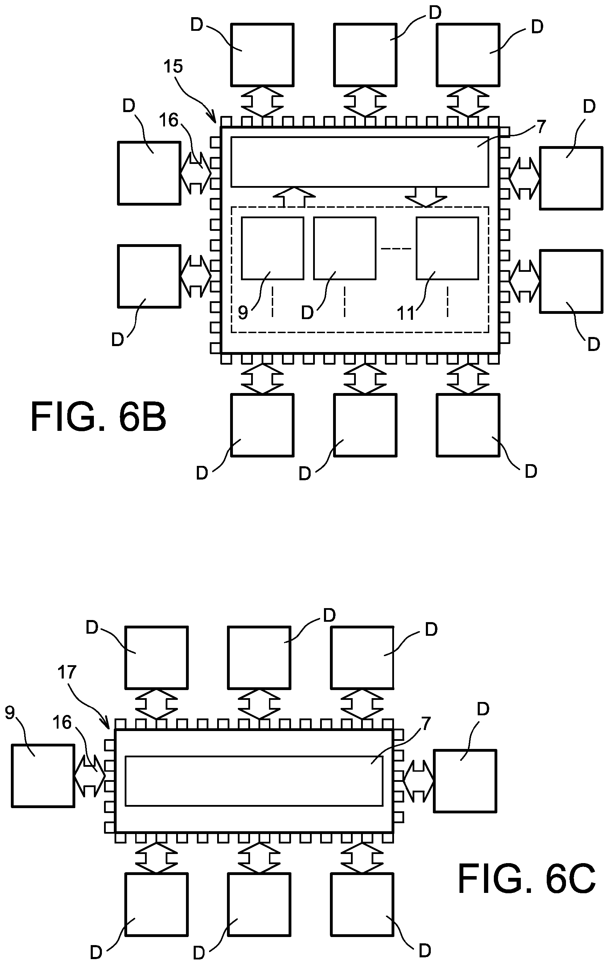

La figure 6B représente un deuxième exemple de composant de technologie SoC qui intègre un dispositif d'ordonnancement selon l'invention. Le composant 15 comprend différentes entités hétérogènes, ainsi qu'un ensemble de capteurs D. Le dispositif de l'invention gère également des capteurs D situés à l'extérieur du composant et reliés à celui-ci à l'aide d'une interface adaptée 16. Les ressources hétérogènes sont ici des microprocesseurs 9 et des blocs dédiés et propriétaires 11.

La figure 6C représente un troisième exemple de composant de technologie SoC qui intègre un dispositif d'ordonnancement selon l'invention. L'ensemble des entités gérées par le dispositif de l'invention est ici à l'extérieur du composant 17 et piloté par le dispositif de l'invention par l'intermédiaire d'une interface adaptée 16.

### REFERENCES BIBLIOGRAPHIQUES

[BLAZ86] J. Blazewicz, M. Drabowski, et Weglarz. Scheduling Multiprocessor Tasks to Minimize Schedule Length. IEEE Transactions on Computers, 35(5):389-393, mai 1989.
[JANS99] K. Jansen et L. Porkolab. Improved Approximation Schemes for Scheduling Unrelated Parallel Machines. In Annual ACM Symposium on Theory of Computing (STOC), mai 1999.
[BAER73] J.L. Baer. A Survey of Some Theoretical Aspects of Multiprocessing. ACM Computing Surveys, 5(1):31-80, mars 1973.
[BAKE81] B.S. Baker, D.J. Brown, et H.P. Katseff. A 5/4 Algorithm for Two-Dimensional Packing. Journal of Algorithms, 2(4):348-368, juin 1981
[TOPC02] H. Topcuoglu, S. Hariri, et M-Y. Wu. Performance and Low-Complexity Task Scheduling for Heterogeneous Computing. IEEE Transactions on Parallel and Distributed Systems, 13(3):260-274, mars 2002.
[BELK90] K. Belkhale et P. Banerjee. Approximate Scheduling Algorithms for the Partitionable Independent Task Scheduling Problem. In the 1990 International Conférence of Parallel Processing (ICPP). août 1990.
[LI00] K. Li et Y. Pan. Probabilistic Analysis of Scheduling Precedence Constrained Parallel Tasks on Multicomputers with Contiguous Processor Allocation. IEEE Transactions on Computer, 49(10):1021-1030, octobre 2000.
[IBAR88] T. Ibaraki et N. Katoh. Resource Allocation Problems: Algorithmic Approaches. The MIT Press, Cambridge, USA, 1988.
[PETE81] James L. Peterson. Petri net theory and the modelling of systems. Practice Hall, ISBN: 0136619835.

## Revendications

1. Procédé d'ordonnancement de traitement de tâches dont l'exécution est conditionnée par un ordre de préséance, le traitement d'une tâche comprenant une étape de configuration de ressources nécessaires à l'exécution de la tâche et une étape d'exécution de la tâche sur les ressources ainsi configurées, **caractérisé en ce qu'**il comprend :
- une sélection (1) d'au moins un niveau de tâches **indépendantes** à traiter, **en accord avec l'ordre de préséance, le traitement d'un niveau de tâches de rang G débutant dès lors que toutes les tâches du niveau de tâches de rang G-1 qui précède le niveau de tâches de rang G ont été configurées,**
- une étape de tri (2) des tâches du niveau de tâches à traiter pour définir un ordre de priorité dans le traitement des tâches, en fonction, d'une part, du nombre de ressources nécessaires au traitement des tâches et, d'autre part, d'une grandeur caractéristique des tâches,
- une évaluation (3) du nombre de ressources disponibles pour le traitement des tâches du niveau de tâches, et
- une assignation (4) des tâches du niveau de tâches aux ressources disponibles conformément à l'ordre de priorité.

2. Procédé d'ordonnancement de traitement de tâches selon la revendication 1, **caractérisé en ce que** l'étape de tri (2) comprend, d'une part, un premier tri selon le nombre de ressources nécessaires à l'exécution des tâches de sorte que les tâches soient traitées selon un ordre décroissant du nombre de ressources nécessaires à leur traitement et, d'autre part, un deuxième tri selon la grandeur caractéristique des tâches de sorte que les tâches soient traitées selon un ordre croissant ou décroissant de leur grandeur caractéristique.

3. Procédé d'ordonnancement de traitement de tâches selon la revendication 2, **caractérisé en ce que** le premier tri précède le deuxième tri, le deuxième tri étant mis en oeuvre dès lors que le nombre de ressources nécessaires aux traitement de plusieurs tâches est identique pour lesdites plusieurs tâches.

4. Procédé d'ordonnancement de traitement de tâches selon la revendication 2, **caractérisé en ce que** le deuxième tri précède le premier tri, le premier tri étant mis en oeuvre dès lors que la grandeur caractéristique des tâches relative à plusieurs tâches est identique pour lesdites plusieurs tâches.

5. Procédé d'ordonnancement de traitement de tâches selon l'une quelconque des revendications précédentes, **caractérisé en ce que** la grandeur caractéristique des tâches est la durée de traitement des tâches, ou la durée de configuration des ressources nécessaires à l'exécution des tâches, ou la durée d'exécution des tâches, ou une durée qui reste à une tâche pour s'exécuter en fonction d'une contrainte temporelle d'exécution associée à la tâche, ou la durée de traitement, de configuration ou d'exécution de une ou plusieurs tâches de rang supérieur dans l'ordre de préséance des tâches, ou une date de fin au plus tard de la configuration des tâches ou de l'exécution des tâches, ou une date de début au plus tôt ou au plus tard de la configuration ou de l'exécution de une ou plusieurs tâches de rang supérieur dans l'ordre de préséance des tâches, ou une durée fonction d'une périodicité relative à une ou plusieurs tâches, ou une durée fonction de tout ou partie des grandeurs caractéristiques énumérées ci-dessus.

6. Procédé d'ordonnancement de traitement de tâches selon l'une quelconque des revendications 1 à 4, **caractérisé en ce que** la grandeur caractéristique des tâches est une largeur de bande passante utile à l'exécution des tâches, ou une cadence d'arrivée des données traitées par les tâches, ou un nombre de ressources utiles au stockage ou à la communication des données traitées par les tâches, ou un coût de communications avec d'autres tâches ou avec des ressources partagées entre les tâches, ou une consommation d'énergie engendrée par le traitement des tâches, ou une information qui mesure la complexité des opérations associées à l'exécution des tâches, ou une information qui mesure la régularité d'un algorithme associé à l'exécution des tâches, ou une information qui mesure le parallélisme d'exécution des tâches, ou une information qui mesure une priorité indépendante des tâches et imposée par un utilisateur dans le cas d'une utilisation multi-utilisateur, ou une fonction de tout ou partie des grandeurs caractéristiques énumérées ci-dessus.

7. Procédé d'ordonnancement de traitement de tâches selon l'une quelconque des revendications 1 à 4, **caractérisé en ce que** la grandeur caractéristique des tâches est une information relative à la position des tâches dans un graphe d'application.

8. Procédé d'ordonnancement de traitement de tâches selon la revendication 7, **caractérisé en ce que** l'information relative à la position des tâches dans un graphe d'application est la durée qui reste aux tâches pour s'exécuter avant la fin d'une contrainte temporelle imposée à la durée de traitement du graphe d'application, ou le plus grand nombre de tâches qui restent à traiter avant la fin du graphe d'application, ou le plus grand nombre de tâches de rang supérieur dans l'ordre de préséance des tâches, ou la somme des durées d'exécution des tâches de rang supérieur dans l'ordre de préséance des tâches, ou une fonction de tout ou partie des grandeurs énumérées ci-dessus.

9. Procédé d'ordonnancement de traitement de tâches selon l'une quelconque des revendications précédentes, **caractérisé en ce que** le niveau de tâches est défini par validation de contraintes de préséance des tâches du niveau de tâches.

10. Procédé d'ordonnancement de traitement de tâches selon l'une quelconque des revendications précédentes, **caractérisé en ce que** l'assignation des ressources disponibles en fonction de l'ordre de priorité est répété de façon dynamique jusqu'à ce que toutes les tâches du niveau de tâches soient traitées.

11. Procédé d'ordonnancement de traitement de tâches selon l'une quelconque des revendications précédentes, **caractérisé en ce qu'**il comprend une étape de rejet du traitement de une ou plusieurs tâches du niveau de tâches à traiter afin d'autoriser un fonctionnement dégradé.

12. Procédé de traitement de tâches dont l'exécution est conditionnée par un ordre de préséance, le traitement d'une tâche comprenant une étape de configuration de ressources nécessaires à l'exécution de la tâche et une étape d'exécution de la tâche sur les ressources ainsi configurées, **caractérisé en ce qu'**il comprend un ordonnancement du traitement des tâches selon le procédé de l'une quelconque des revendications 1 à **11** et **en ce que** la configuration des ressources et l'exécution des tâches sont activées, respectivement, par un jeton de configuration et par un jeton d'exécution.

13. Dispositif d'ordonnancement de traitement de tâches dont l'exécution est conditionnée par un ordre de préséance, le traitement d'une tâche comprenant une étape de configuration de ressources nécessaires à l'exécution de la tâche et une étape d'exécution de la tâche sur les ressources ainsi configurées, **caractérisé en ce qu'**il comprend :
- un composant (CR) qui contient un ensemble de tâches à traiter,
- un bloc de sélection (BS) pour sélectionner au moins un niveau de tâches indépendantes à traiter parmi l'ensemble des tâches contenues dans le composant (CR), **en accord avec l'ordre de préséance, le traitement d'un niveau de tâches de rang G débutant dès lors que toutes les tâches du niveau de tâches de rang G-1 qui précède le niveau de tâches de rang G ont été configurées,**
- des moyens (BM1, BM2, TP) pour trier les tâches du niveau de tâches sélectionné selon un ordre de priorité de sorte que, les tâches soient traitées, en fonction, d'une part, du nombre de ressources nécessaires au traitement des tâches et, d'autre part, d'une grandeur caractéristique des tâches, et
- des moyens (BG) pour assigner des ressources disponibles au traitement des tâches en fonction de l'ordre de priorité.

14. Dispositif d'ordonnancement de traitement de tâches selon la revendication **13, caractérisé en ce que** les moyens (BM1, BM2, TP) pour trier les tâches d'un niveau de tâches sélectionné comprennent :
- un premier bloc mémoire (BM1) contenant des informations (R0, RI, ..., RN) représentatives du nombre de ressources nécessaires au traitement de chaque tâche,
- un deuxième bloc mémoire (BM2) contenant des informations (D0, D1, ..., DN) représentatives de grandeurs caractéristiques des tâches,
- des premiers moyens de comparaison (MC1) pour comparer entre elles les informations représentatives des grandeurs caractéristiques des tâches du niveau de tâches,
- des deuxièmes moyens de comparaison (MC2) pour comparer le nombre de ressources disponibles au nombre de ressources nécessaires aux traitements des tâches du niveau de tâches, et
- des moyens (TP) pour établir l'ordre de priorité en fonction des résultats de comparaison délivrés par les premiers et deuxièmes moyens de comparaison.

15. Dispositif selon la revendication 15, **caractérisé en ce que** les moyens (TP) pour établir l'ordre de priorité en fonction des résultats de comparaison comprennent un ensemble de registres à décalage contenant des données binaires.

16. Dispositif selon l'une quelconque des revendications **13** à **15, caractérisé en ce que** la grandeur caractéristique des tâches est la durée de traitement des tâches, ou la durée de configuration des ressources nécessaires à l'exécution des tâches, ou la durée d'exécution des tâches, ou une durée qui reste à une tâche pour s'exécuter en fonction d'une contrainte temporelle d'exécution associée à la tâche, ou la durée de traitement, de configuration ou d'exécution de une ou plusieurs tâches de rang supérieur dans l'ordre de préséance des tâches, ou une date de fin au plus tard de la configuration des tâches ou de l'exécution des tâches, ou une date de début au plus tôt ou au plus tard de la configuration ou de l'exécution de une ou plusieurs tâches de rang supérieur dans l'ordre de préséance des tâches, ou une durée fonction d'une périodicité relative à une ou plusieurs tâches, ou une durée fonction de tout ou partie des grandeurs caractéristiques énumérées ci-dessus.

17. Dispositif selon l'une quelconque des revendications **13** à **15, caractérisé en ce que** la grandeur caractéristique des tâches est une largeur de bande passante utile à l'exécution des tâches, ou une cadence d'arrivée des données traitées par les tâches, ou un nombre de ressources utiles au stockage ou à la communication des données traitées par les tâches, ou un coût de communications avec d'autres tâches ou avec des ressources partagées entre les tâches, ou une consommation d'énergie engendrée par le traitement des tâches, ou une information qui mesure la complexité des opérations associées à l'exécution des tâches, ou une information qui mesure la régularité d'un algorithme associé à l'exécution des tâches, ou une information qui mesure le parallélisme d'exécution des tâches, ou une information qui mesure une priorité indépendante des tâches et imposée par un utilisateur dans le cas d'une utilisation multi-utilisateur, ou une fonction de tout ou partie des grandeurs caractéristiques énumérées ci-dessus.

18. Dispositif selon l'une quelconque des revendications **13** à **15, caractérisé en ce que** la grandeur caractéristique des tâches est une information relative à la position des tâches dans un graphe d'application.

19. Dispositif selon la revendication **18, caractérisé en ce que** l'information relative à la position des tâches dans un graphe d'application est la durée qui reste aux tâches pour s'exécuter avant la fin d'une contrainte temporelle imposée à la durée de traitement du graphe d'application, ou le plus grand nombre de tâches qui restent à traiter avant la fin du graphe d'application, ou le plus grand nombre de tâches de rang supérieur dans l'ordre de préséance des tâches, ou la somme des durées d'exécution des tâches de rang supérieur dans l'ordre de préséance des tâches, ou une fonction de tout ou partie des grandeurs énumérées ci-dessus.

20. Dispositif d'ordonnancement de traitement de tâches selon l'une quelconque des revendications **13** à **19, caractérisé en ce que** le composant (CR) qui contient l'ensemble des tâches à traiter est un composant reconfigurable adapté au contrôle qui comprend N+1 cellules (Ci) représentant N+1 états d'un graphe d'application de tâches à exécuter, chaque cellule contenant une tâche à exécuter, et un réseau d'interconnexion reconfigurable pour relier les différents états du graphe entre eux.

21. Dispositif de traitement de tâches, **caractérisé en ce qu'**il comprend un dispositif d'ordonnancement de traitement de tâches selon la revendication **20,** un jeton de configuration et un jeton d'exécution parcourant le réseau d'interconnexion pour activer, respectivement, la configuration des tâches et l'exécution des tâches.

22. Dispositif selon l'une quelconque des revendications **13** à **21, caractérisé en ce que** le bloc de sélection (BS) comprend des moyens pour rejeter le traitement de une ou plusieurs tâches du niveau de tâches à traiter afin d'autoriser un fonctionnement dégradé.

## Patentansprüche

1. Verfahren zur Ablaufplanung der Verarbeitung von Tasks, deren Ausführung durch eine Rangordnung konditioniert ist, wobei die Verarbeitung eines Tasks einen Schritt der Konfiguration von Ressourcen umfasst, die für die Ausführung des Tasks erforderlich sind, sowie einen Schritt der Ausführung des Tasks mit den derart konfigurierten Ressourcen, **dadurch gekennzeichnet, dass** es umfasst:
- eine Auswahl (1) wenigstens eines Niveaus von zu verarbeitenden unabhängigen Tasks in Übereinstimmung mit der Rangordnung, wobei die Verarbeitung eines Niveaus von Tasks mit Rang G beginnt, sobald alle Tasks des Niveaus von Tasks mit Rang G-1, das dem Niveau von Tasks mit Rang G vorausgeht, konfiguriert worden sind,
- einen Schritt der Sortierung (2) der Tasks des Niveaus von zu verarbeitenden Tasks, um eine Prioritätenordnung in der Verarbeitung der Tasks einerseits als Funktion der Zahl von Ressourcen zu definieren, die für die Verarbeitung der Tasks erforderlich sind, und andererseits als Funktion einer charakteristischen Größe der Tasks,
- eine Bewertung (3) der Zahl von Ressourcen, die verfügbar sind für die Verarbeitung der Tasks des Niveaus von Tasks, und
- eine Zuweisung (4) der Tasks des Niveaus von Tasks zu den verfügbaren Ressourcen gemäß der Prioritätenordnung.

2. Verfahren zur Ablaufplanung der Verarbeitung von Tasks nach Anspruch 1, **dadurch gekennzeichnet, dass** der Schritt der Sortierung (2) einerseits eine erste Sortierung gemäß der Zahl von Ressourcen umfasst, die für die Ausführung der Tasks erforderlich sind, derart, dass die Tasks gemäß einer Reihenfolge abnehmender Zahl der für ihre Verarbeitung erforderlichen Ressourcen verarbeitet werden, und andererseits eine zweite Sortierung gemäß der charakteristischen Größe der Tasks derart, dass die Tasks gemäß einer Reihenfolge zunehmender oder abnehmender charakteristischer Größe verarbeitet werden.

3. Verfahren zur Ablaufplanung der Verarbeitung von Tasks nach Anspruch 2, **dadurch gekennzeichnet, dass** die erste Sortierung der zweiten Sortierung vorausgeht, wobei die zweite Sortierung durchgeführt wird, sobald die Zahl von Ressourcen, die für die Verarbeitung mehrerer Tasks erforderlich sind, für die mehreren Tasks identisch ist.

4. Verfahren zur Ablaufplanung der Verarbeitung von Tasks nach Anspruch 2, **dadurch gekennzeichnet, dass** die zweite Sortierung der ersten Sortierung vorausgeht, wobei die erste Sortierung durchgeführt wird, sobald die charakteristische Größe derTasks bezüglich mehrerer Tasks für die mehreren Tasks identisch ist.

5. Verfahren zur Ablaufplanung der Verarbeitung von Tasks nach einem der vorhergehenden Ansprüche, **dadurch gekennzeichnet, dass** die charakteristische Größe der Tasks die Dauer der Verarbeitung der Tasks ist, oder die Dauer der Konfiguration der Ressourcen, die für die Ausführung der Tasks erforderlich sind, oder die Dauer der Ausführung der Tasks, oder eine Dauer, die für einen Task für seine Ausführung als Funktion einer zeitlichen Ausführungsbedingung bleibt, die dem Task zugeordnet ist, oder die Dauer der Verarbeitung, der Konfiguration oder der Ausführung eines oder mehrererTasks mit höherem Rang in der Rangordnung derTasks, oder ein spätestes Enddatum der Konfiguration derTasks oder der Ausführung der Tasks, oder ein frühestes oder ein spätestes Anfangsdatum der Konfiguration oder der Ausführung eines oder mehrerer Tasks mit höherem Rang in der Rangordnung der Tasks, oder eine Dauer, die eine Funktion einer Periodizität bezüglich eines oder mehrerer Tasks ist, oder eine Dauer, die eine Funktion aller oder eines Teils der oben aufgelisteten charakteristischen Größen ist.

6. Verfahren zur Ablaufplanung der Verarbeitung von Tasks nach einem der Ansprüche 1 bis 4, **dadurch gekennzeichnet, dass** die charakteristische Größe der Tasks eine für die Ausführung der Tasks nützliche Passbandbreite ist, oder eine Ankunftskadenz der durch die Tasks verarbeiteten Daten, oder eine Zahl von Ressourcen, die zur Speicherung oder zur Kommunikation der durch die Tasks verarbeiteten Daten nützlich ist, oder die Kosten von Kommunikationen mit anderen Tasks oder mit Ressourcen, die zwischen den Tasks geteilt werden, oder ein Energieverbrauch, der durch die Verarbeitung der Tasks erzeugt wird, oder eine Information, die die Komplexität der mit der Ausführung der Tasks verbundenen Operationen misst, oder eine Information, die die Regularität eines mit der Ausführung der Tasks verbundenen Algorithmus misst, oder eine Information, die den Parallelismus der Ausführung der Tasks misst, oder eine Information, die eine unabhängige Priorität der Tasks misst, die durch einen Benutzer im Fall einer Mehrbenutzerverwendung verliehen wird, oder eine Funktion aller oder eines Teils der oben aufgelisteten charakteristischen Eigenschaften.

7. Verfahren zur Ablaufplanung der Verarbeitung von Tasks nach einem der Ansprüche 1 bis 4, **dadurch gekennzeichnet, dass** die charakteristische Größe der Tasks eine Information bezüglich der Position der Tasks in einem Anwendungsgraphen ist.

8. Verfahren zur Ablaufplanung der Verarbeitung von Tasks nach Anspruch 7, **dadurch gekennzeichnet, dass** die Information bezüglich der Position der Tasks in einem Anwendungsgraphen die Dauer ist, die den Tasks für ihre Ausführung vor dem Ende einer zeitlichen Bedingung bleibt, die der Dauer der Verarbeitung des Anwendungsgraphen auferlegt ist, oder die größte Zahl von Tasks, die vor dem Ende des Anwendungsgraphen zu verarbeiten bleiben, oder die größte Zahl von Tasks mit höherem Rang in der Rangordnung der Tasks, oder die Summe der Ausführungsdauern der Tasks mit höherem Rang in der Rangordnung der Tasks, oder eine Funktion aller oder eines Teils der oben aufgelisteten Größen.

9. Verfahren zur Ablaufplanung der Verarbeitung von Tasks nach einem der vorhergehenden Ansprüche, **dadurch gekennzeichnet, dass** das Niveau von Tasks durch Validierung von Rangbedingungen der Tasks des Niveaus von Tasks definiert ist.

10. Verfahren zur Ablaufplanung der Verarbeitung von Tasks nach einem der vorhergehenden Ansprüche, **dadurch gekennzeichnet, dass** die Zuweisung der verfügbaren Ressourcen als Funktion der Prioritätenordnung auf dynamische Weise wiederholt wird, bis alle Tasks des Niveaus von Tasks verarbeitet sind.

11. Verfahren zur Ablaufplanung der Verarbeitung von Tasks nach einem der vorhergehenden Ansprüche, **dadurch gekennzeichnet, dass** es einen Schritt der Zurückweisung der Verarbeitung eines oder mehrerer Tasks des zu verarbeitenden Niveaus von Tasks umfasst, um eine verschlechterte Funktion zuzulassen.

12. Verfahren zur Verarbeitung von Tasks, deren Ausführung durch eine Rangordnung konditioniert ist, wobei die Verarbeitung eines Tasks einen Schritt der Konfiguration von Ressourcen umfasst, die für die Ausführung des Tasks erforderlich sind, sowie einen Schritt der Ausführung des Tasks mit den derart konfigurierten Ressourcen, **dadurch gekennzeichnet, dass** es eine Ablaufplanung der Verarbeitung der Tasks gemäß dem Verfahren nach einem der Ansprüche 1 bis 11 umfasst, und dass die Konfiguration der Ressourcen und die Ausführung der Tasks durch einen Konfigurationstoken beziehungsweise durch einen Ausführungstoken aktiviert werden.

13. Vorrichtung zur Ablaufplanung der Verarbeitung von Tasks, deren Ausführung durch eine Rangordnung konditioniert ist, wobei die Verarbeitung eines Tasks einen Schritt der Konfiguration von Ressourcen umfasst, die für die Ausführung des Tasks erforderlich sind, sowie einen Schritt der Ausführung des Tasks mit den derart konfigurierten Ressourcen, **dadurch gekennzeichnet, dass** sie umfasst:
- eine Komponente (CR), die eine Gruppe von zu verarbeitenden Tasks enthält,
- einen Auswahlblock (BS) zum Auswählen wenigstens eines Niveaus von zu verarbeitenden unabhängigen Tasks aus der Gruppe von Tasks, die in der Komponente (CR) enthalten sind, in Übereinstimmung mit der Rangordnung, wobei die Verarbeitung eines Niveaus von Tasks mit Rang G beginnt, sobald alle Tasks des Niveaus von Tasks mit Rang G-1, das dem Niveau von Tasks mit Rang G vorausgeht, konfiguriert worden sind,
- Mittel (BM1, BM2, TP) zum Sortieren der Tasks des ausgewählten Niveaus von Tasks gemäß einer Prioritätenordnung derart, dass die Tasks als Funktion einerseits der Zahl von Ressourcen verarbeitet werden, die für die Verarbeitung der Tasks erforderlich sind, und andererseits als Funktion einer charakteristischen Größe der Tasks, und
- Mittel (BG) zum Zuweisen der für die Verarbeitung der Tasks verfügbaren Ressourcen als Funktion der Prioritätenordnung.

14. Vorrichtung zur Ablaufplanung der Verarbeitung von Tasks nach Anspruch 13, **dadurch gekennzeichnet, dass** die Mittel (BM1, BM2, TP) zum Sortieren der Tasks eines ausgewählten Niveaus von Tasks umfassen:
- einen ersten Speicherblock (BM1), der Informationen (R0, R1, ..., RN) enthält, die für die Zahl von Ressourcen repräsentativ sind, die für die Verarbeitung jedes Tasks erforderlich sind,
- einen zweiten Speicherblock (BM2), der Informationen (D0, D1, ..., DN) enthält, die für charakteristische Größen der Tasks repräsentativ sind,
- erste Vergleichsmittel (MC1) zum Vergleichen der repräsentativen Informationen der charakteristischen Größen der Tasks des Niveaus von Tasks miteinander,
- zweite Vergleichsmittel (MC2) zum Vergleichen der Zahl von verfügbaren Ressourcen mit der Zahl von Ressourcen, die für die Verarbeitung der Tasks des Niveaus von Tasks erforderlich sind, und
- Mittel (TP) zum Erstellen der Prioritätenordnung als Funktion der Vergleichsergebnisse, die durch die ersten und die zweiten Vergleichsmittel geliefert werden.

15. Vorrichtung nach Anspruch 14, **dadurch gekennzeichnet, dass** die Mittel (TP) zum Erstellen der Prioritätenordnung als Funktion der Vergleichsergebnisse eine Gruppe von Schieberegistern umfassen, die binäre Daten enthalten.

16. Vorrichtung nach einem der Ansprüche 13 bis 15, **dadurch gekennzeichnet, dass** die charakteristische Größe der Tasks die Dauer der Verarbeitung der Tasks ist, oder die Dauer der Konfiguration der Ressourcen, die für die Ausführung der Tasks erforderlich sind, oder die Dauer der Ausführung der Tasks, oder eine Dauer, die für einen Task für seine Ausführung als Funktion einer zeitlichen Ausführungsbedingung bleibt, die dem Task zugeordnet ist, oder die Dauer der Verarbeitung, der Konfiguration oder der Ausführung eines oder mehrerer Tasks mit höherem Rang in der Rangordnung der Tasks, oder ein spätestes Enddatum der Konfiguration derTasks oder der Ausführung der Tasks, oder ein frühestes oder ein spätestes Anfangsdatum der Konfiguration oder der Ausführung eines oder mehrerer Tasks mit höherem Rang in der Rangordnung der Tasks, oder eine Dauer, die eine Funktion einer Periodizität bezüglich eines oder mehrerer Tasks ist, oder eine Dauer, die eine Funktion aller oder eines Teils der oben aufgelisteten charakteristischen Größen ist.

17. Vorrichtung nach einem der Ansprüche 13 bis 15, **dadurch gekennzeichnet, dass** die charakteristische Größe der Tasks eine für die Ausführung der Tasks nützliche Passbandbreite ist, oder eine Ankunftskadenz der durch die Tasks verarbeiteten Daten, oder eine Zahl von Ressourcen, die zur Speicherung oder zur Kommunikation der durch die Tasks verarbeiteten Daten nützlich ist, oder die Kosten von Kommunikationen mit anderen Tasks oder mit Ressourcen, die zwischen den Tasks geteilt werden, oder ein Energieverbrauch, der durch die Verarbeitung derTasks erzeugt wird, oder eine Information, die die Komplexität der mit der Ausführung der Tasks verbundenen Operationen misst, oder eine Information, die die Regularität eines mit der Ausführung der Tasks verbundenen Algorithmus misst, oder eine Information, die den Parallelismus der Ausführung derTasks misst, oder eine Information, die eine unabhängige Priorität der Tasks misst, die durch einen Benutzer im Fall einer Mehrbenutzerverwendung verliehen wird, oder eine Funktion aller oder eines Teils der oben aufgelisteten charakteristischen Eigenschaften.

18. Vorrichtung nach einem der Ansprüche 13 bis 15, **dadurch gekennzeichnet, dass** die charakteristische Größe der Tasks eine Information bezüglich der Position der Tasks in einem Anwendungsgraphen ist.

19. Vorrichtung nach Anspruch 18, **dadurch gekennzeichnet, dass** die Information bezüglich der Position der Tasks in einem Anwendungsgraphen die Dauer ist, die den Tasks für ihre Ausführung vor dem Ende einer zeitlichen Bedingung bleibt, die der Dauer der Verarbeitung des Anwendungsgraphen auferlegt ist, oder die größte Zahl von Tasks, die vor dem Ende des Anwendungsgraphen zu verarbeiten bleiben, oder die größte Zahl von Tasks mit höherem Rang in der Rangordnung der Tasks, oder die Summe der Ausführungsdauern derTasks mit höherem Rang in der RangordnungderTasks, oder eine Funktion aller oder eines Teils der oben aufgelisteten Größen.

20. Vorrichtung zur Ablaufplanung der Verarbeitung von Tasks nach einem der Ansprüche 13 bis 19, **dadurch gekennzeichnet, dass** die Komponente (CR), die die Gruppe von zu verarbeitenden Tasks enthält, eine rekonfigurierbare Komponente ist, die für die Steuerung ausgelegt ist, die N+1 Zellen (Ci) umfasst, die N+1 Zustände eines Anwendungsgraphen von auszuführenden Tasks repräsentieren, wobei jede Zelle einen auszuführenden Task enthält, sowie ein rekonfigurierbares Verbindungsnetzwerk zum Verbinden der verschiedenen Zustände des Graphen miteinander.

21. Vorrichtung zur Verarbeitung von Tasks, **dadurch gekennzeichnet, dass** sie eine Vorrichtung zur Ablaufplanung der Verarbeitung von Tasks nach Anspruch 20 umfasst, wobei ein Konfigurationstoken und ein Ausführungstoken das Verbindungsnetzwerk durchlaufen, um die Konfiguration der Tasks beziehungsweise die Ausführung der Tasks zu aktivieren.

22. Vorrichtung nach einem der Ansprüche 13 bis 21, **dadurch gekennzeichnet, dass** der Auswahlblock (BS) Mittel zum Zurückweisen der Verarbeitung eines oder mehrerer Tasks des zu verarbeitenden Niveaus von Tasks umfasst, um eine verschlechterte Funktion zuzulassen.

## Claims

1. A scheduling method for processing tasks, the execution of which is conditioned by an order of precedence, the processing of a task comprising a step for configuring resources required for executing the task and a step for executing the task on the thereby configured resources, **characterized in that** it comprises:
- a selection (1) of at least one level of independent tasks to be processed, in accordance with the order of precedence, the processing of a task level of rank G begins as soon as all the tasks of the task level of rank G-1 which precedes the task level of rank G, have been configured,
- a step for sorting (2) out the tasks at the level of the tasks to be processed in order to define an order of priority in the processing of the tasks, depending on the number of resources required for processing the tasks on the one hand and on a quantity characteristic of the tasks on the other hand,
- an evaluation (3) of the number of available resources for processing the tasks at the task level, and
- an assignment (4) of the tasks at the task level to the available resources according to the order of priority.

2. The scheduling method for processing tasks according to claim 1, **characterized in that** the sorting (2) step comprises a first sorting according to the number of resources required for executing the tasks on the one hand, so that the tasks are processed according to a decreasing order of the number of resources required for their processing and, a second sorting according to the characteristic quantity of the tasks on the other hand, so that the tasks are processed according to an increasing or decreasing order of their characteristic quantity.

3. The scheduling method for processing tasks according to claim 2, **characterized in that** the first sorting precedes the second sorting, the second sorting being applied as soon as the number of resources required for processing several tasks is identical for said several tasks.

4. The scheduling method for processing tasks according to claim 2, **characterized in that** the second sorting precedes the first sorting, the first sorting being applied as soon as the characteristic quantity of the tasks relative to several tasks is identical for said several tasks.

5. The scheduling method for processing tasks according to any of the preceding claims, **characterized in that** the quantity characteristic of the tasks is the processing time of the tasks, or the configuration time of the resources required for executing the tasks, or the execution time of the tasks, or a time which is left to a task for executing depending on an execution time constraint associated with the task, or the processing, configuration or execution time of one or several tasks of upper rank in the order of precedence of the tasks, or a latest end date for configuring the tasks or executing the tasks, or an earliest or latest start date for configuring or executing one or several tasks of upper rank in the order or precedence of the tasks, or a time depending on a periodicity relative to one or several tasks, or a time depending on the whole or part of the characteristic quantities listed above.

6. The scheduling method for processing tasks according to any of claims 1 to 4, **characterized in that** the quantity characteristic of the tasks is a passband width useful for executing the tasks, or an arrival rate of data processed by the tasks, or a number of useful resources for storing or communicating data processed by the tasks, or a cost for communicating with other tasks or with resources shared among the tasks, or a power consumption generated by the processing of the tasks, or a piece of information which measures the complexity of the operations associated with the execution of the tasks, or a piece of information which measures the regularity of an algorithm associated with the execution of the tasks, or a piece of information which measures the parallelism of task execution, or a piece of information which measures a priority independent of the tasks and imposed by a user in the case of multi-user use, or a function of the whole or part of characteristic quantities listed above.

7. The scheduling method for processing tasks according to any of claims 1 to 4, **characterized in that** the quantity characteristic of the tasks is a piece of information relating to the position of the tasks in an application graph.

8. The scheduling method for processing tasks according to claim 7, **characterized in that** the piece of information relating to the position of the tasks in an application graph is the time which is left to the tasks for executing before the end of a time constraint imposed on the processing time of the application graph, or the largest number of tasks which remain to be processed before the end of the application graph, or the largest number of tasks of upper rank in the order of precedence of the tasks, or the sum of the execution times of the tasks of upper rank in the order of precedence of the tasks, or a function of the whole or part of the quantities listed above.

9. The scheduling method for processing tasks according to any of the preceding claims, **characterized in that** the level of independent tasks is defined by validating constraints of precedence of the tasks at the task level.

10. The scheduling method for processing tasks according to any of the preceding claims, **characterized in that** the assignment of the available resources depending on the order of priority is dynamically repeated until all the tasks of the task level are processed.

11. The scheduling method for processing tasks according to any of the preceding claims, **characterized in that** it comprises a step for rejecting the processing of one or more tasks of the task level to be processed in order to allow degraded operation.

12. A method for processing tasks, the condition of which is conditioned by an order of precedence, the processing of a task comprising a step for configuring resources required for executing the task and a step for executing the task on thereby configured resources, **characterized in that** it comprises a scheduling of the processing of the tasks according to the method of any of claims 1 to 11 and **in that** the configuration of the resources and the execution of the tasks are activated by a configuration token and by an execution token, respectively.

13. A scheduling device for processing tasks, the execution of which is conditioned by an order of precedence, the processing of a task comprising a step for configuring resources required for executing the task and a step for executing the task on the thereby configured resources, **characterized in that** it comprises:
- a component (CR) which contains a set of tasks to be processed,
- a selection block (BS) for selecting at least one level of independent tasks to be processed among the set of tasks contained in the component (CR), according to the order of precedent, the processing of a task level of rank G begins as soon as all the tasks of the task level of rank G-1 which precedes the task level of rank G, have been configured,
- means (BM1, BM2, TP) for sorting out the tasks of the selected task level according to an order of priority so that the tasks are processed, depending on the number of resources required for processing each of the tasks on the one hand and on a characteristic quantity of the tasks on the other hand, and
- means (BG) for assigning resources available to the processing of tasks depending on the order of priority.

14. The scheduling device for processing tasks according to claim 14, **characterized in that** the means (BM1, BM2, TP) for sorting the tasks of a selected task level comprise:
- a first memory block (BM1) containing information (R0, R1, ..., RN) representative of the number of resources required for processing each task,
- a second memory block (BM2) containing pieces of information (D0, D1, ..., DN) representative of quantities characteristic of the tasks,
- first comparison means (MC1) for comparing with each other the representative pieces of information of the quantities characteristic of the tasks of the task level,
- second comparison means (MC2) for comparing the number of available resources with the number of resources required for processing the tasks of the task level, and
- means (TP) for establishing the order of priority depending on the comparison results delivered by the first and second comparison means.

15. The device according to claim 14, **characterized in that** the means (TP) for establishing the order of priority depending on the comparison results comprise a set of shift registers containing binary data.

16. The device according to any of claims 13 to 15, **characterized in that** the quantity characteristic of the tasks is the processing time of the tasks, or the configuration time of the resources required for executing the tasks, or the execution time of the tasks, or a time which is left to a task for executing depending on an execution time constraint associated with the task, or the processing, configuration or execution time of one or several tasks of upper rank in the order of precedence of the tasks, or a latest end date for configuring the tasks or executing the tasks, or an earliest or latest start date for configuring or executing one or several tasks of upper rank in the order of precedence of the tasks, or a time depending on a periodicity relative to one or more tasks, or a time depending on the whole or part of the characteristic quantities listed above.

17. The device according to any of claims 13 to 15, **characterized in that** the quantity characteristic of the tasks is a passband width useful for executing the tasks, or an arrival rate of data processed by the tasks, or a number of useful resources for storing or communicating data processed by the tasks, or a cost for communicating with other tasks or resources shared among the tasks, or a power consumption generated by the processing of the tasks, or a piece of information which measures the complexity of the operations associated with the execution of the tasks, or a piece of information which measures the regularity of algorithm associated with the execution of the tasks, or a piece of information which measures the parallelism of execution of the tasks, or a piece of information which measures a priority independent of the tasks and imposed by a user in the case of multi-user use, or a function of the whole or part of the characteristic quantities listed above.

18. The device according to any of claims 13 to 15, **characterized in that** the quantity characteristic of the tasks is a piece of information relating to the position of the tasks in an application graph.

19. The device according to claim 18, **characterized in that** the piece of information relating to the position of the tasks in an application graph is the time which is left to the tasks for executing before the end of a time constraint imposed on the processing time of the application graph, or the largest number of tasks which remain to be processed before the end of the application graph, or the largest number of tasks of upper rank in the order of precedence of the tasks, or the sum of the execution times of the tasks of upper rank in the order of precedence of the tasks, or a function of the whole or part of the quantities listed above.

20. The scheduling device for processing tasks according to any of claims 13 to 19, **characterized in that** the component (CR) which contains the set of tasks to be processed is a reconfigurable component suitable for control which comprises N+1 cells (Ci) representing N+1 states of a graph for applying the tasks to be executed, each cell containing a task to be executed, and a reconfigurable interconnection network for connecting the different states of the graph to each other.

21. A device for processing tasks, **characterized in that** it comprises a scheduling device for processing tasks according to claim 20, a configuration token and an execution token traveling through the interconnection network for activating the configuration of the tasks and the execution of the tasks, respectively.

22. The device according to any of claims 13 to 21, **characterized in that** the selection block (BS) comprises means for rejecting the processing of one or several tasks of the task level to be processed in order to allow degraded operation.
